# EUROPEAN PATENT APPLICATION

(11) **EP 0 671 778 A2**
(43) Date of publication of application: **13.09.1995**
(21) Application number: 94304770.4
(22) Date of filing: 30.06.1994
(51) Int. Cl.: H01Q 1/32, H01Q 7/00, H01F 5/02, B60R 25/04

(54) **Antenna coil assembly for an automobile transponder key system**

(30) Priority: 09.03.1994 US 209207
(71) Applicant: STANDEX INTERNATIONAL CORPORATION, Salem New Hampshire 03079 (US)
(72) Inventor: Meeks, John R., Mason, Ohio (US); Goekler, Lewis E., Cincinnati, Ohio (US); Rieck, Robert W., Batavia, Ohio (US); Heimbrock, H. Howard, Lawrenceburg, Indiana (US)
(74) Representative: Findlay, Alice Rosemary

(57) **Abstract**

A coil assembly (10) includes a plastic bobbin (12) with wire (30,32) coiled thereon and coupled to the pins (38, 48, 54) of a connector (40). Plastic overmolding (60) covers wires (30,32) within bobbin (12) and fixes connector (40) relative to bobbin (12). A polyester bobbin (12) is made by injecting polyester into a mold having cavities (101, 151) to define the outer circumference of the bobbin and surrounding an arbor (106, 160) to define the inner circumference of the bobbin. The arbor (106, 160) with the molded bobbin (12) is removed from between the cavities (101, 151) and the bobbin (12) is slid laterally off the arbor by applying generally uniform pressure about a lateral edge (20, 22) of the bobbin so as not to warp same during the removal process.

## Description

The present invention relates to automobile anti-theft systems utilizing a transponder key and, more particularly, to the antenna coil assembly therefor.

In a passive automobile anti-theft system, a transponder key includes circuitry that, upon receiving a particular set of RF signals, responds by emitting another set of RF signals. If the proper signals are received back from the key, the anti-theft circuitry will start the ignition of the car, for example. Thus, when an improper key is used, the automobile will not start. Also, because a coded signal must be received, merely hot-wiring the ignition system at the steering wheel will not result in starting the vehicle either.

To facilitate transmitting the RF signals between the anti-theft circuitry and the key, an antenna or inductive coil system is proposed. For use with automobiles, the coil is situated on the steering wheel column about the ignition key cylinder so that as the transponder key is inserted into what appears to be the ignition, it also passes through the center of the coil to receive and transmit the RF signals.

Circuitry for generating, receiving and acting upon the transponder RF signal is known. However, there is a need for a coil or antenna that can withstand the temperature and humidity extremes presented in the automotive environment but which does not add significantly to the cost of such systems.

The present invention has as an object the provision of an antenna coil assembly which may be used in automobile transponder key systems which coil assembly withstands the temperature and humidity extremes present in the automotive environment and, yet, is easily and inexpensively manufactured. In a preferred embodiment, the coil assembly is formed as a bobbin having a diameter size to receive the transponder key therethrough with wire being coiled onto the bobbin and the pins of a connector being coupled to the ends of the coiled wire. In one aspect, an overmolding step is performed in which an overmolding is applied over the circumference of the bobbin and a portion of the connector pins to not only secure the coiled wire to and within the bobbin's circumference, but to also generally fix the connector relative to the bobbin. The overmolding material grips to the bobbin such as about the circumference so as to hold the connector in place and minimize shrinkage and expansion which effects the electrical characteristics of the coil assembly during temperature and humidity swings.

In a further embodiment, to further avoid humidity and temperature problems, a humidity seal layer is formed over the overmolding and bobbin. The seal layer may be applied by dipping the overmolding and bobbin into a vat of liquid humidity sealing material so that all of the bobbin and at least a portion of the overmolding over the connector pins is covered with the humidity seal. The dipped product is removed from the vat and carries a layer of sealing material thereon which is then dried or cured to provide an effective humidity barrier.

The added humidity seal layer may be eliminated where the bobbin and the overmolding are of the same material so that when the overmolding is accomplished, it fuses into the bobbin to create a generally integral unit, which is resistant to temperature and humidity variations. It has been determined that, in such a case, the preferred material for both the bobbin and the overmolding is polypropylene. Prior attempts to make a coil assembly with a polypropylene bobbin and overmold have met with poor results. It has been found that the process of making the bobbin is at fault especially since each bobbin is generally quite flimsy and prone to warp during that process.

In a yet further embodiment, a process of forming a polypropylene bobbin has been developed which overcomes problems previously encountered with proposed polypropylene bobbins. More particularly, a mold is provided, the die halves of which have cavities which cooperate to define the outer circumference of the bobbin. To define the inner circumference of the bobbin, i.e., the central aperture through which the transponder key is to be inserted, an arbor or cylinder is placed between the dies within the mold. When the mold is closed with the arbor therein, polypropylene may be injected into the mold to fill the cavities and surround the arbor to define the bobbin. After the bobbin is formed within the mold, the mold is opened to reveal the bobbin on the arbor. The arbor is removed from the mold with the bobbin in place thereon. After removal from the mold, and before or after desprueing, generally uniform pressure is applied about one lateral edge of the bobbin and around the arbor to slide the bobbin off the arbor. By so forming the bobbin, excessive pressure to one part of the bobbin relative another is avoided, so that the fragile bobbin does not have a tendency to warp or otherwise deform during the process of making same.

By virtue of the foregoing, there is thus provided a coil assembly particularly useful in transponder key automobile systems and which can withstand the temperature and humidity extremes present in an automobile, yet is easily and inexpensively manufactured.

The invention will now be described with reference to the accompanying drawings in which:-
Fig. 1 is a perspective view of one embodiment of an antenna coil assembly for an automobile transponder key system in accordance with the principles of the present invention;
Fig. 2 is a perspective view of the bobbin of the antenna coil assembly of Fig. 1;
Fig. 3 is a perspective view of the bobbin of Fig. 1 with wire coiled thereon and coupled to a connector prior to overmolding;
Fit. 3A is an enlarged perspective view of the connector of Fig. 3;
Fig. 4 is a top, perspective view of one die-half of a mold for overmolding the bobbin, wire and connector shown in Fig. 3 to produce the antenna coil assembly of Fig. 1, it being understood that the other overmolding die-half is complimentary to that shown in Fig. 4;
Fig. 5 is a schematic representation showing the application of the liquid humidity seal to the antenna coil assembly of Fig. 4 in accordance with one feature of the present invention;
Fig. 6 is a perspective view of the antenna coil assembly of Fig. 1 after application of the liquid humidity seal in Fig. 5;
Fig. 7 is an exploded, perspective view of a mold and arbor for forming the bobbin of Fig. 2 with polypropylene in accordance with another feature of the present invention;
Fig. 8 is a diagrammatic view of the polypropylene bobbin of Fig. 2 being removed from the arbor of Fig. 7 in accordance with the principles of the present invention;
Fig. 9 is a perspective view of a second mold for forming a plurality of the bobbins of Fig. 2 with polypropylene in accordance with the principles of the present invention;
Fig. 10 is a perspective view of the plurality of polypropylene bobbins formed in the mold of Fig. 9 shown on the arbors thereof;
Fig. 11 is a schematic, side view of a desprueing and bobbin removal apparatus for removing the bobbins from the arbors of Fig. 10 in accordance with the principles of the present invention;
Fig. 12 is a schematic, top view of the apparatus of Fig. 11; and
Fig. 13 is a cut-away, partial side view of the apparatus of Fig. 11 for purposes of describing the method of removal of the bobbins from the arbor.

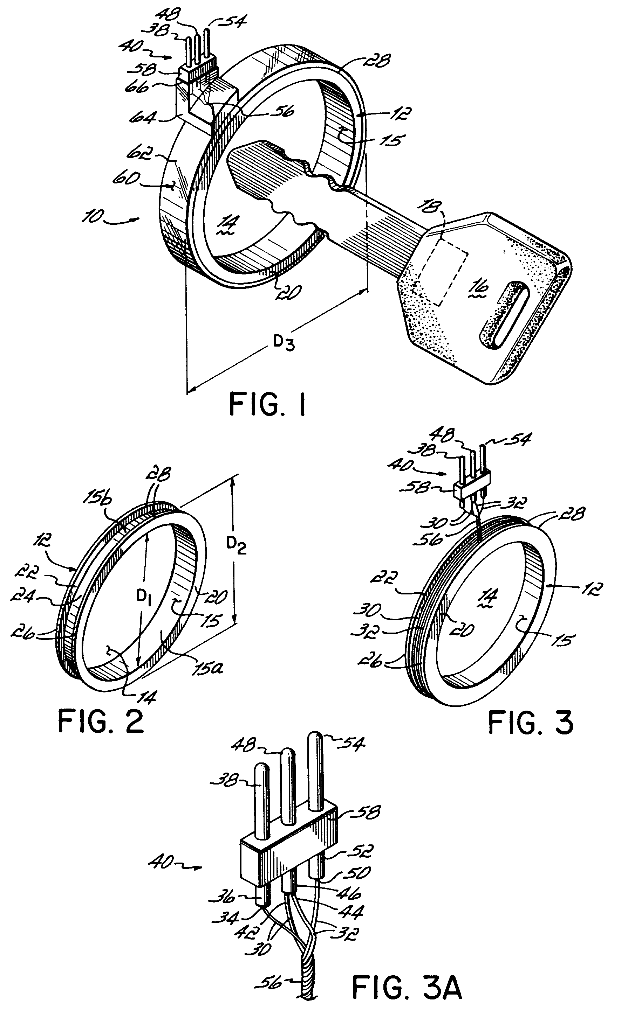

With reference to Figs. 1-3 there is shown an embodiment of an antenna coil assembly 10 for an automobile transponder key system (not shown) in accordance with the principles of the present invention. Antenna coil assembly 10 includes a plastic bobbin 12 (Fig. 2) sized to fit over an ignition key cylinder of an automobile steering wheel column (not shown) so as to receive therethrough and within the inner circumference or hole 14 a transponder key 16 such that the electronic circuitry 18 on key 16 becomes situated within circumference 14. The hole 14 has a diameter D1 which may be about 38.4 mm. As seen in Fig. 2, circumferential wall 15 has an inner aspect 15a and an outer aspect or floor 15b to thus define the thickness (about 1.4 mm) of wall 15. The side edges of wall 15 each extend radially outwardly to define lateral edges or rims 20,22. Edges 20,22 and floor 15b cooperate to define annular groove 24 (about 3.9 mm wide) and outer circumference 26 of bobbin 12 (having an outer diameter D2 of about 41.9 mm, for example, defined at lips 28 of edges 20,22). Edges 20,22 extend about 2.1 mm above floor 15b and are each about .5 to .6 mm wide for a total width of bobbin 12 of about 5.0 mm.

To communicate electronic signals to and from circuitry 18 of key 16, an antenna is formed therein. To this end, and as seen in Figs. 3 and 3A, a length of AWG 40 gauge copper wire 30 (with polyurethane insulation and a polybutyral overcoat) is coiled into groove 24 of outer circumference 26 of bobbin 12 and between rims or lateral edges 20 and 22 of bobbin 12. A second such wire 32 may also be coiled into annular groove 24 of bobbin 12. One end 34 of wire 30 is wrapped around and soldered to the proximal end 36 of first outer pin 38 of a connector 40. The other end 42 of wire 30, and the first end 44 of wire 32, are wrapped around and soldered to the proximal end 46 of middle pin 48 of connector 40. Wire 30 is connected to pin 38 at end 34 and then coiled clockwise about bobbin 12 approximately 23 turns. Wire 30 is then wrapped about pin 48 to define ends 42 and 44 and then the wire is further coiled clockwise about bobbin 12 approximately 163 turns to define wire 32. The end 50 then-remaining of wire 32 is then wrapped about proximal end 52 of second outer pin 54 of connector 40. A drop of solvent such as acetone may be applied where wire 32 departs bobbin 12 toward end 50 to bond the coils within bobbin groove 24. As a result of coiling, bobbin 12 may have been squeezed down such that dimension D1 has decreased to about 38.0 mm.

The ends 34,42,44 and 50 of wires 30 and 32 are soldered to the proximal ends of pins 38, 48 and 54 such as by dip soldering or with soldering iron and solder. The portion of the wires 30,32 between bobbin 12 and pins 38, 48 and 54 are also twisted together into a bundle as at 56 as seen in Fig. 3 to be tight to bobbin 12. Although wires 30 and 32 may be seen to be two separate coils, they may also be viewed as one single 186 turn coil with a tap at their common ends 42, 44, the coil(s) being referred to as an antenna or inductor.

Electrical signals are coupled to and from coils or antennas 30 and 32 through pins 38, 48 and 54 held in plastic block 58 of connector 40 to communicate signals to and from circuitry 18 of key 16 when it is placed through hole 14 of bobbin 12. The circuitry 18 and the circuitry to which pins 38, 48 and 54 connect are known and form no part of the present invention.

As will be appreciated, in the inside of an automobile (not shown) there are wide swings in temperature and humidity. Temperature and humidity extremes and variations can cause the electrical performance of antennae 30 and/or 32 on bobbin 12 to alter their characteristics. It is desirable, however, to minimize such alterations so that antenna coil 10 performs as desired. To this end, an overmolding 60 (Fig. 1) is formed about bobbin 12 and wires 30,32 so as to enclose the coils between rims 20 and 22. Overmolding 60 extends to at least lips 28 of rims 20, 22 so as to create an essentially closed band 62 about bobbin 12 having a diameter D3 of about 42.5 mm. Additionally, a portion 64 of overmolding 60 extends over bundle 56 of wires 30, 32; over proximal ends 36, 46 and 52 of pins 38, 48, 54, and against and partially overlapping bottom side 66 of the plastic block 58 of connector 40 so as to completely contain within overmolding 60 all of wires 30, 32 and to rigidly fix connector 40 and its associated pins relative to bobbin 12. In this way, there is a moisture barrier provided as well as a mechanical connection of connector 40 to bobbin 12 so as to maintain its dimensional relationship and minimize the impact of temperature and humidity on the performance of antenna coil 10. Portion 64 may hold connector 40 such that the distal end tips of pins 38, 48, 54 define a plane that is approximately 33.7 mm from a parallel plane intersecting the longitudinal axis of bobbin 12, and with the pins extending in a plane defined by the adjacent one of rims 20,22. Alternatively, the connector 40 may be held at an angle, such as 90°, or between 0° and 90°, relative to the plane.

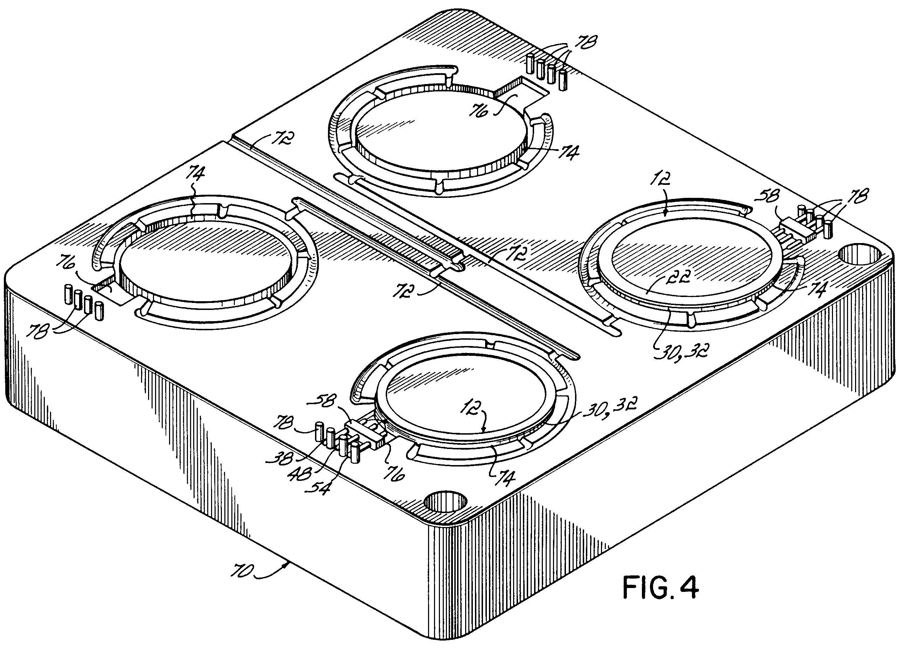

To accomplish the overmolding, the bobbin, coiled wires and connector as seen in Fig. 3 are placed into an overmold. One such overmold includes a bottom die 70 as shown in Fig. 4, the top die (not shown) being the complementary image thereof as will be appreciated by those familiar with plastic molding and dies. Die 70 includes runners 72 for injecting plastic into four cavities 74 each designed to hold a respective bobbin 12 and connector 40. A bobbin 12 sits in a cavity 74 with lateral edge 20 or 22 therein to a depth such that connector block 58 sits in adjacent cavity cutout 76 such that the pins extend laterally outwardly from the uppermost edge 20 or 22 with respective longitudinal axes of the pins in generally a plane defined by the associated edge. The respective ones of pins 38, 48, 54 are captured between adjacent pairs of four holding posts 78 as seen in the right side portion of Fig. 4. The top die (not shown) has similar cavities and cutouts to accommodate the rest of bobbin 12 and also to receive posts 78 and the upper portion of connector block 58 so as to isolate the distal ends of the pins from the plastic injected through runners 72.

After the die halves are brought together, an overmold plastic, such as polypropylene (which has a molding temperature of about 440°F) an example of which is type C-432-20 unfilled, Homo Polymer from Aristech, a subsidiary of Mitsubishi Corp. in Pittsburgh, Pennsylvania, is injected into runners 72 and, then, into cavities 74 and 76 to form overmolding 60. The inject pressure gauge may be 325 lbs. with a feed setting of 174 inches. The rear and front cylinder temperatures are 478°F and 480°F, respectively, with a nozzle temperature at 475°F. The inject time is 8 seconds and cooling time is 7 seconds, for a total cycle time of 15 seconds. Other mold perameters may be selected as will be readily appreciated by those skilled in the art. Thereafter, the mold halves are opened and the overmolded bobbin removed and desprued as is conventional. The result is antenna coil assembly 10 as seen in Fig. 1 wherein the coils 30, 32 are covered and connector 40 is securely held in fixed relationship to bobbin 12. As will be readily appreciated, connector 40 mates with another connector (not shown) in the vehicle steering column for transmission and receipt of RF signals.

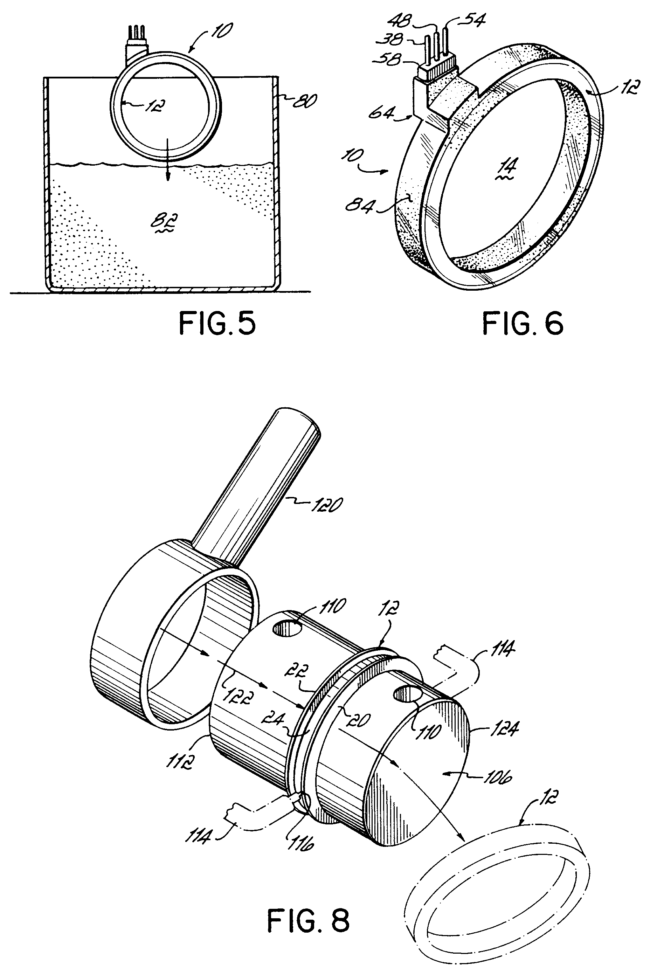

In some cases, bobbin 12 may be made of polyester, for example, whereas overmolding 60 is made from polypropylene. It will be appreciated that polypropylene has a much lower molding temperature than polyester (which has a molding temperature of about 500° F) and, hence, when overmolding 60 is molded over bobbin 12 and wires 30, 32, there may not be good adhesion of overmolding 60 to rims 20, 22 along the peripheral lips 28 thereof. As a result, there could be some dimensional changes over temperature and humidity which could adversely affect performance of antenna coil assembly 10. To obviate such problems, antenna coil assembly 10 may be provided with a humidity seal. To this end, and as seen in Fig. 5, bobbin 12 with overmolding 60 thereon (coil assembly 10), may be dipped into a vat 80 of liquid humidity seal 82 (such as HumiSeal acrylic type 1B66 available from Humiseal Division of Columbia Chase Corporation in Woodside, NY) so that the entire overmolded bobbin 12 and, if desired, at least some of overmolding portion 64 are immersed in the liquid 82. The antenna coil assembly 10 is then removed from the liquid leaving liquid humidity seal 82 about antenna coil assembly 10 especially bobbin 12, band 62 and possibly part of portion 64. The liquid is then air dried for about twenty-four hours or cured (such as in an oven) to create a generally liquid impermeable film or barrier 84 about antenna coil 10, especially where overmolding 60 abuts bobbin 12, as seen in Fig. 6. The humidity barrier thus created is about .5 mm thick but eliminates exposed gaps between rims 20,22 and overmolding 60 yet is pliable enough not to crack during thermal cycling.

It has been found that the foregoing provides a generally adequate antenna coil sufficient to meet the electrical demands thereon over the temperature and humidity extremes encountered in an automobile (not shown). However, it has been proposed that the bobbin also be made of polypropylene so that the humidity seal may be eliminated. This is possible because the polypropylene overmolding 60 will have a tendency to merge and become integral with the polypropylene bobbin 12 during the overmolding process so as to create a generally continuous plastic ring with no gaps for humidity to permeate, thereby providing the desired temperature and humidity performance characteristics. However, a past attempt to make a polypropylene bobbin has not met with great satisfaction. In particular, during the manufacturing process, the polypropylene bobbin, which is thin and fragile, has a tendency to warp. A warped bobbin 12 is not desirable for the antenna coil assembly 10 and may not perform as desired.

It has been found that one of the reasons the polypropylene bobbin 12 tends to warp during the manufacturing process is that in a conventional molding technique, the formed bobbin 12 is horizontally disposed and is ejected from the mold by pins or the like in the mold, which thus apply localized pressure at various points along a lateral edge 20 or 22 of bobbin 12. It has further been found that if generally uniform pressure can be applied against a lateral edge 20 or 22 to remove bobbin 12 from the mold, bobbin 12, when made of polypropylene, has less of a tendency to warp and, therefore, can be used with polypropylene overmolding permitting elimination of the humidity seal step.

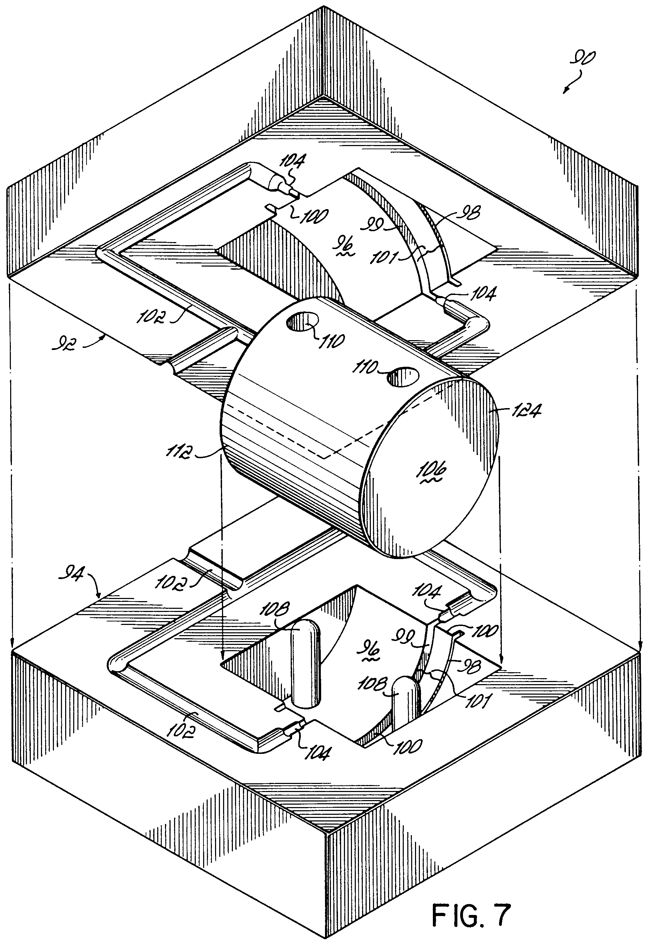

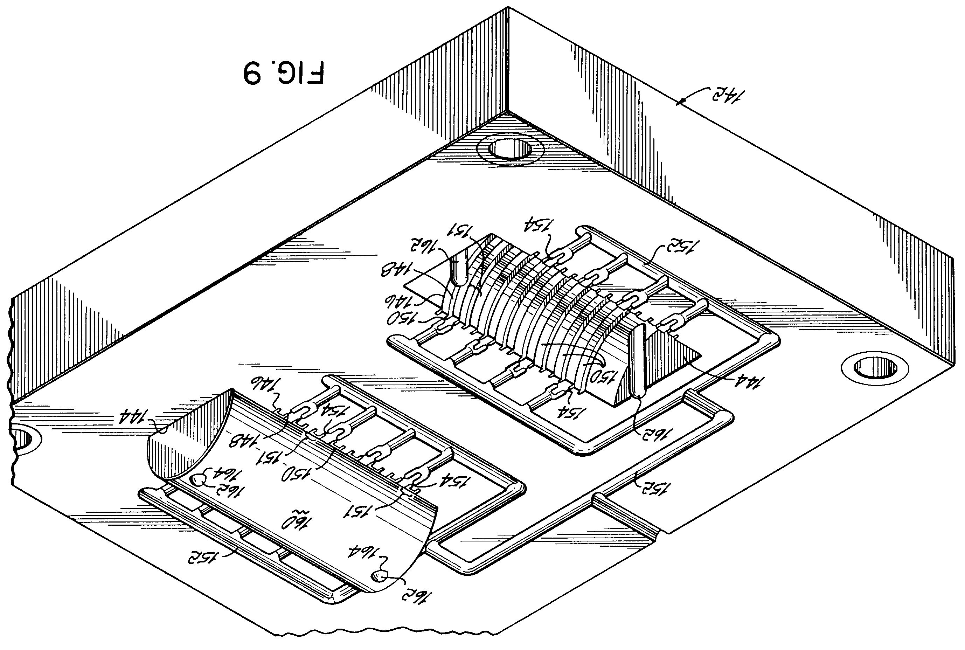

In accordance with a further feature of the present invention, a polypropylene bobbin is successfully made without deleterious warping. To this end, and as shown in Figs. 7 and 8, a mold 90 is provided having upper and lower die halves 92, 94. Each die half includes a half-moon recess 96 sized to approximately equal dimension D1 (Fig. 2). A pair of grooves 98, 99 having a thickness corresponding to edges 20 and 22, respectively, are formed in each recess 96 with the area 100 therebetween recessed (to correspond to the thickness of wall 15) to collectively define a cavity 101 corresponding to part of outer circumference 26 of bobbin 12, i.e., rims 20, 22 and outer wall 19 of bobbin 12, such that cavities 101 of the two die halves collectively correspond to the complete outer circumference 26. Runners 102 coupled via gates 104 to grooves 98, 99 provide pathways to inject plastic into the mold. Placed within recesses 96 of mold 90 and between die halves 92 and 94 is a central core 106 such as an arbor or other cylinder which has a diameter equal to the inner diameter D1 of bobbin 12 to thus define the inner circumference 14 thereof. Die halves 92 and 94 are closed about arbor 106 which may be held in place therein by cooperating pins 108 and slots 110 in mold half 92 and arbor 106, respectively, so that when polypropylene is injection molded into the grooves 98, 99 through runners 102 and gates 104, bobbin 12 is formed.

With the die halves closed and arbor 106 in place therein, polypropylene is injected into runners 102 to fill cavities 101 and define bobbin 12. After the bobbin is thus formed within the mold, mold halves 92 and 94 are opened to reveal a bobbin 12 situated on arbor 106. Arbor 106 is removed from the mold with bobbin 12 still in place (see Fig. 8). Sprues 114 formed from plastic remaining in runners 102 and gates 104 may then be removed from bobbin 12 such as by cutting at 116. To remove bobbin 12 without warping, generally uniform pressure is to be applied to lateral edge (such as edge 20, for example) of bobbin 12 either before or after sprues 114 are removed. To this end, and as exemplified in Fig. 8, a stiff ring 120 such as a metal or rigid plastic (such as nylon) ring, is employed having an inner diameter slightly larger than the diameter of arbor 106 and less than the outer diameter D2 of bobbin 12 (e.g., between 38.4 to 41.9 mm) and desirably about 38.8 mm so that the ring hits the lateral edges of bobbin 12 at wall 15 where there is greater strength to the bobbin. The ring 120 is slid over one end 112 of arbor 106 such as in the direction of arrow 122 to impact against one of the lateral edges or rims 20, 22 of bobbin 12. Ring 120 is continued in that same direction to slide bobbin 12 to the other end 124 of arbor 106 until bobbin 12 slides off of arbor 106. By using ring 120, generally uniform pressure is applied about one lateral edge 20 or 22 of bobbin 12 and around arbor 106 without applying excessive pressure to one part of a rim of bobbin 12 relative another so that the fragile bobbin does not have a tendency to warp or otherwise deform.

It will be appreciated that although only one bobbin 12 is shown, a mold could be designed with plural grooves and/or cavities so that a plurality of bobbins 12 may be formed about arbor 106 at one time. To this end, reference is made to Fig. 9 in which bottom die-half 142 of an embodiment of one such mold is shown, it being appreciated that the top die half (not shown) is complementary thereto. Each die half thus includes two half-moon recesses 144, each sized to approximate D1. Each recess 144 also includes a plurality of groove pairs 146, 148 with the area 150 between each groove of pins being recessed to collectively define, plural, vertically disposed and in-line cavities 151, each corresponding to part of the outer circumference 26 of a bobbin 12 such that when the die halves are joined together, pairs of cavities 151 cooperate to define the outer circumference 26 of a plurality of bobbins 12. Runners 152 coupled via gates 154 to grooves 146, 148 provide pathways to inject plastic into the mold. Each recess 144 may include 8 cavities 151.

Placed within each recess 144 is an arbor or cylinder 160 (only one shown in Fig. 9) having a diameter of approximately D1 to thus define the inner circumference 14 of a plurality of bobbins 12. The die halves (e.g., 142) of the mold are closed about arbors 160 which may be held in place therein by cooperating pins 162 and slots 164 in mold half 142 and arbors 160, respectively, so that when polypropylene is injected into grooves 146, 148 through runners 152 and gates 154, a plurality of bobbins 12 are formed.

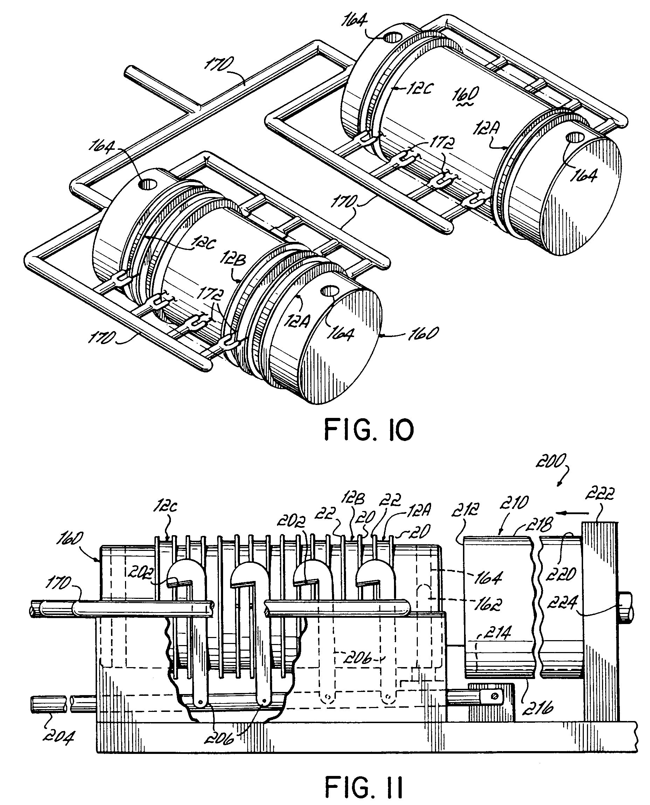

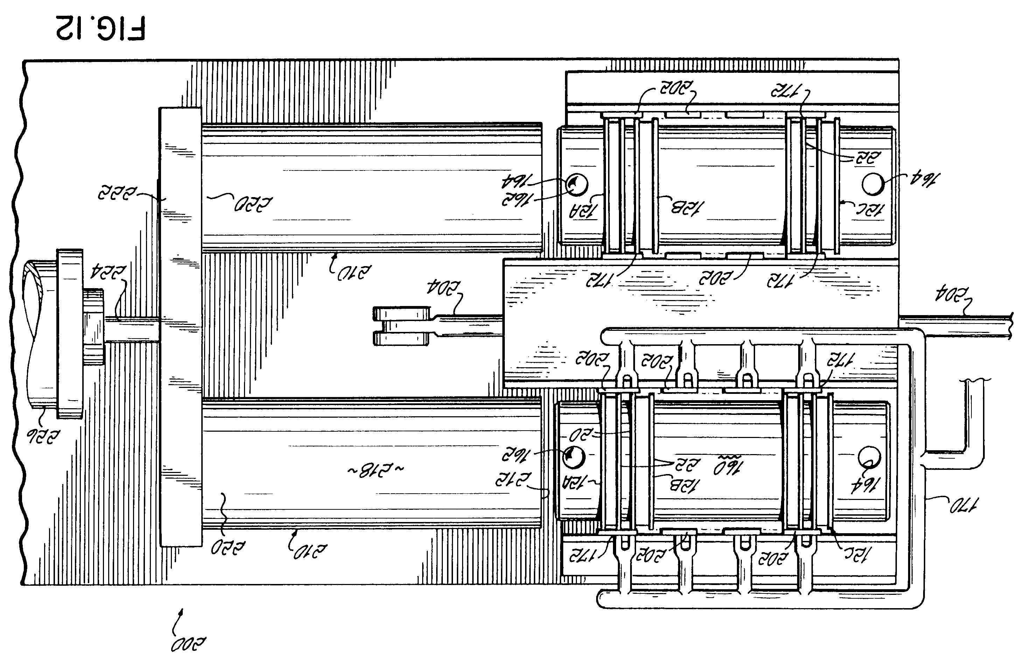

With the mold 140 closed and arbors 160 in place therein, polypropylene (which may be the same as the overmolding polypropylene described above) is injected into runners 152 to fill cavities 151 and define a plurality of vertically disposed, in-line bobbins 12. The inject pressure gauge may be 325 lbs. with a feed setting of 174 inches. The rear and front cylinder temperatures are 478°F and 480°F, respectively, with a nozzle temperature at 475°F. The inject time is 8 seconds and cooling time is 7 seconds, for a total cycle time of 15 seconds. After bobbins 12 are thus formed within mold 140, the die halves thereof are opened to reveal two rows of bobbins 12 situated on their respective arbors 160. Arbors 160 are removed from the mold with bobbins 12 thereon and with the related sprue material 170 (from runners 152 and gates 154) attached to the bobbins as seen in Fig. 10. Sprues 170 may be removed by cutting as at 172. Sprues 170 may be removed all at one time by placing arbors 160 and bobbins 12 thereon into a jig 200 as shown in Figs. 11 and 12. Jig 200 includes a plurality of cutting blades 202 mounted to a common handle 204. Blades 202 extend from handle 204 by arms 206 to sit atop a respective sprue cut point 172. Lowering of handle 204 relative jig 200 pulls blades 202 into sprues 170 to cut them all at about the same time.

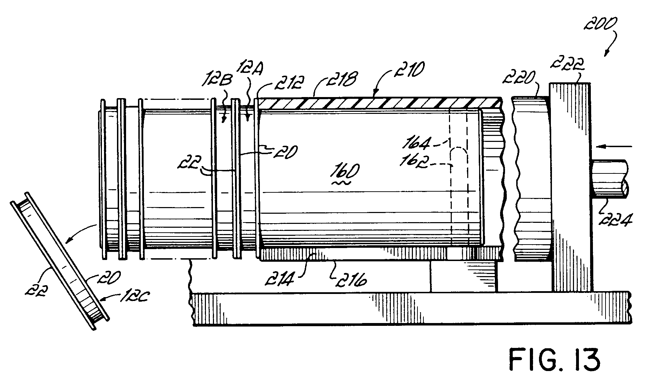

After removing sprue material 170, bobbins 12 are removed from their respective arbors 160 in a non-warp-inducing manner such as similar to that shown in Fig. 8. To this end, a rigid plastic (e.g., nylon) cylinder 210 is situated behind each arbor 160 in jig 200. Each cylinder 210 has an inner diameter between 38.4 and 41.9 mm and is desirably sized to match to the location of wall 15 of bobbin 12 such as about 38.8 to 38.9 mm.
Cylinder 210 is thus, effectively, like ring 120 of Fig. 8 to provide a generally uniform surface at edge 212 to bear against an edge 20 (or 22) of innermost bobbin 12A. As each cylinder 210 is pushed over arbor 160 (See Fig. 13), edge 212 impacts adjacent edge 20 of bobbin 12A and slides it into the next bobbin 12B such that edge 22 of bobbin 12A impacts against edge 20 of bobbin 12B. This sequence continues until each bobbin 12 is against the adjacent bobbin 12. Thereafter, further movement of cylinder 120 pushes the outermost bobbin 12C off of its arbor 160 (see Fig. 13). The process continues until each bobbin 12 is pushed from arbors 160. In this way, it is seen that edge 212 of cylinder 210, and the subsequent leading edges 22 of adjacent bobbins, cooperate to apply generally uniform pressure to the lateral edge 20 of each bobbin to thus remove them from arbors 160 without applying excessive pressure to one part of a lateral edge of a given bobbin 12 relative another so that the fragile bobbins do not have a tendency to warp or otherwise deform.

Cylinders 210 may each include a longitudinal notch 214 along the bottom edge 216 thereof (see Fig. 13). This notch 214 is provided to avoid impacting against locating pins 216 in jig 200 that mate with slots 164 of arbors 160 which hold arbors 160 in jig 200. Notches 214 are very small (about 16 mm wide) relative to the overall peripheral length of edge 212 (about 122 mm) and thus edge 212 may still be seen as applying generally uniform pressure to edge 20 of first bobbin 12A even though a small segment of edge 20 might not actually be pushed against.

Also, if desired, a small arcuate depression (not shown) may be included in edge 212 along the top 218 thereof to give clearance for fingers to reach in and grab the arbors 160 for removal from jig 200 without detracting from the generally uniformally applied pressure desired.

Cylinders 210 are coupled at their back ends 220 to a cross bar 222 which in turn is coupled to the ram 224 of a hydraulic cylinder 226 (see Fig. 12). Cylinders 226 may be used to drive cylinders 210 over arbors 160 and to withdraw them after bobbins 12 are removed from arbors 160 by application or removal of air pressure as is well understood.

In use, arbors 160 are placed into mold half 142 and the top mold half is closed thereover. Polypropylene is then injection molded through runners 152 to form bobbins 12 and allowed to cool. The mold is then opened and arbors 160 removed therefrom with bobbins 12 formed thereabout. Sprue material 170 is removed and generally uniform pressure is applied to the lateral edges 20 or 22 of the bobbins and about arbors 160 (such as by ring 120 or cylinder 210 as above-described) to remove bobbins 12 from arbors 160.

Thereafter, wires 30, 32 are coiled about the outer circumference 26 of each bobbin 12 and the ends connected to the pins of connector 40 as previously described. The coiled wires and connector 40 along with a bobbin 12 are placed in the overmold 70 where overmolding 60 is injection molded onto bobbin 12 to fix connector 40 and its associated pins relative to bobbin 12. Where overmolding 60 and bobbin 12 are both polypropylene, the result will be to form a generally integral annular member containing therein coils 30, 32. The completed product 10 may then be used such as with an automobile transponder key system.

Where bobbin 12 is not made from polypropylene, or if it is additionally desired to have a further humidity seal, antenna coil assembly 10 may be dipped in the liquid humidity seal 82 as above-described and then dried or cured as necessary.

While the present invention has been illustrated by the description of embodiments of the invention, and while the embodiments have been described in considerable detail, additional advantages and modifications will readily appear to those skilled in the art. For example, a horizontal molding process may be used to make the polypropylene bobbins where the arbor is affixed as part of the mold to define the center core of the cavity, with the bottom of the cavity, for example, including a movable, generally ring-shaped member about the center core. The invention in its broader aspects is therefore not limited to the specific details, representative apparatus and method and illustrative examples shown and described.

## Claims

1. A method of making a polypropylene bobbin (12) for a coil assembly (10) comprising providing a core (106,160) having a diameter to define an inner circumference (14) of said bobbin (12), providing a cavity (101,151)about the core (106,160), the cavity (101,151) defining an outer circumference (26) of said bobbin (12), placing polypropylene into the cavity (101,151) and about the core (106,160) to form said bobbin (12), the method characterized by non-warpingly removing the formed polypropylene bobbin (12) from the core (106,160).

2. A method of making a plurality of polypropylene bobbins (12) for coil assemblies (10) comprising providing an arbor core (106,160) having a diameter corresponding to the inner circumference (14) of the plurality of bobbins (12), providing a first die (92,142)on one side of the arbor, the first die having a plurality of respective vertical cavities (101,151) each to define a portion of the outer circumference (26) of a respective bobbin (12), providing a second die (94,142) on another side of the arbor, the second die having a plurality of respective vertical cavities (101,151) each to define another portion of the outer circumference (26) of the respective bobbin (12), and placing polypropylene into the cavities (101,151) and about the arbor core (106,160) to form the plurality of bobbins (12), the method being characterized by removing the bobbins (12) and the arbor core (106,160) from between the dies (92,94,142) with the arbor core (106,160) held within the bobbin inner circumferences (14) and non-warpingly removing the formed polypropylene bobbins (12) from the arbor core (106,160).

3. A method as claimed in claim 1 wherein the cavity (101,151) is provided by a pair of dies (92,94,142) having cavities (101,151) which combine to define an outer circumference (26) of said bobbin and the core (106,160) is provided by an arbor (106,160) between the dies (92,94,142), the arbor (106,160) having a diameter to define an inner circumference (14) of said bobbin (12), the method further characterized by removing said bobbin (12) and the arbor (106,160) from between the dies (92,94,142) with the arbor (106,160) held within said bobbin inner circumference (14) and thereafter non-warpingly removing the formed polypropylene bobbin (12) from the arbor (106,160).

4. A method as claimed in any preceding claim wherein the bobbin (12) is non-warpingly removed by applying pressure generally uniformally against a lateral edge (20,22) of the bobbin and around the core (106,160).

5. A method as claimed in claim 4 when dependent on claim 2 further comprising first applying pressure generally uniformally about a lateral edge (20,22) of one of the bobbins (12A) to move the one bobbin (12A) against a second of the bobbins (12B) whereby to apply pressure generally uniformally about a lateral edge (20,22) of the second bobbin (12B).

6. A method as claimed in any preceding claim wherein the cavity (101,151) and core (106,160) cooperate to define a circumferential wall (15) of the bobbin (12) and a lateral edge (20,22) extending rearwardly outwardly from the wall (15), the method being further characterized in that the bobbin (12) is removed from the core (106,160) by applying pressure to the lateral edge (20,22) in the vicinity of the circumferential wall (15).

7. A method as claimed in any preceding claim further comprising desprueing any sprue material (114,170) connected to the bobbin (12).

8. A method as claimed in claim 7 wherein desprueing occurs before removing the formed bobbin (12) from the core (106,160).

9. A method as claimed in any preceding claim further comprising coiling a wire (30,32) about a said formed bobbin (12).

10. A method as claimed in claim 9 further comprising coupling the wire (30,32) to a connector (40)

11. A method as claimed in claim 10 further comprising fixing the connector (40) relative to the bobbin (12).

12. A method as claimed in claim 11 further characterized in that the connector (40) is fixed relative to the bobbin (12) by overmolding plastic (60) about the bobbin (12) and at least a portion of the connector (40).

13. A method as claimed in claim 12 further comprising overmolding plastic (60) about the wire (30,32) between the bobbin (12) and the connector (40).

14. A method as claimed in either of claims 12 and 13 further characterized by overlaying a humidity seal layer (84) over at least a portion of the overmolded plastic (60) and the bobbin (12).
